Europäisches Patentamt

(19) European Patent Office

Office européen des brevets

(11) **EP 0 684 911 B1**

(12) **FASCICULE DE BREVET EUROPEEN**

(45) Date de publication et mention
de la délivrance du brevet:
**26.03.1997 Bulletin 1997/13**

(21) Numéro de dépôt: **94905758.2**

(22) Date de dépôt: **28.01.1994**

(51) Int. Cl.$^6$: **B60L 11/18**

(86) Numéro de dépôt international:
**PCT/FR94/00113**

(87) Numéro de publication internationale:
**WO 94/19208 (01.09.1994 Gazette 1994/20)**

(54) **CHAINE DE TRACTION ELECTRIQUE AVEC ESSIEU MOTEUR A EFFET DIFFERENTIEL ELECTRIQUE**

ELEKTRISCHE ANTRIEBSANORDNUNG MIT ELEKTRISCHER DIFFERENTIAL-ANTRIEBSACHSE

ELECTRIC DRIVE SYSTEM WITH ELECTRIC DIFFERENTIAL EFFECT DRIVE AXLE

(84) Etats contractants désignés:
**DE FR GB IT SE**

(30) Priorité: **16.02.1993 FR 9301712**

(43) Date de publication de la demande:
**06.12.1995 Bulletin 1995/49**

(73) Titulaire: **AUXILEC**
**F-78400 Chatou (FR)**

(72) Inventeurs:
• **ARNAUD, Georges**
**F-92402 Courbevoie Cédex (FR)**
• **JACQUES, Claude**
**F-92402 Courbevoie Cédex (FR)**
• **STANKOFF, Alain**
**F-92402 Courbevoie Cédex (FR)**
• **SOROKA, Jean-Claude**
**F-92402 Courbevoie Cédex (FR)**

(74) Mandataire: **Guérin, Michel**
**THOMSON-CSF-S.C.P.I.,**
**13, Avenue du Président**
**Salvador Allende**
**94117 Arcueil Cédex (FR)**

(56) Documents cités:
**DE-A- 3 043 004**          **US-A- 4 004 203**
**US-A- 4 638 224**

• **ELEKTROTECHNIK UND INFORMATIONSTECHNIK, vol.109, no.6, 1992, WIEN AT pages 303 - 307 E. REISINGER ET AL 'DOPPELANTRIEB FÜR EIN ELEKTRISCH ANGETRIEBENES STRASSENFAHRZEUG'**
• **PATENT ABSTRACTS OF JAPAN vol. 11, no. 296 (M-627) 25 Septembre 1987 & JP,A,62 089 403 (YASKAWA ELECTRIC MFG CO LTD) 23 Avril 1987**

## Description

La présente invention est relative aux chaînes de traction électriques notamment pour des véhicules automobiles. Elle concerne aussi un véhicule automobile utilisant une telle chaîne de traction électrique.

Dans un véhicule automobile qu'il soit électrique ou à moteur thermique, on utilise, sur chaque essieu moteur un différentiel, généralement mécanique, qui répartit entre les deux roues l'effort de propulsion de l'arbre moteur pour leur permettre de tourner à des vitesses différentes. La puissance motrice fournie par l'arbre moteur sous forme du produit d'un couple C par une vitesse N est transmise à deux demi-arbres entraînant chacun une roue. Cette répartition se fait de la manière suivante :

$$CN = C1\ N1 + C2\ N2$$

C1, C2 sont respectivement les couples sur les deux demi-arbres et N1, N2 respectivement les vitesses. Les vitesses N1,N2 sont la plupart du temps différentes alors que les couples C1, C2 sont égaux.

En effet dans un virage, la roue extérieure tourne plus vite que la roue intérieure car elle parcourt un plus grand chemin. Si les vitesses des deux roues étaient les mêmes, la roue extérieure glisserait sans rouler et userait anormalement le pneumatique. C'est la route qui impose la vitesse des roues.

D'autre part, les deux roues n'ont pas un diamètre rigoureusement identique à cause du gonflage des pneumatiques, de leur usure, de leur température... En conséquence, même en ligne droite, les vitesses des deux roues sont différentes; cette différence est normalement faible de l'ordre de quelques pour cents par exemple.

Le différentiel mécanique présente des inconvénients dans certaines circonstances. Par exemple si un frein bloque une roue motrice, la vitesse de cette roue s'annule et la vitesse de l'autre roue motrice augmente, en entraînant un déséquilibre important et dangereux pour la conduite. Si la vitesse de l'arbre moteur s'annule lorsque le véhicule roule, les deux roues motrices se bloquent ou la boîte de vitesse casse. Si pour une raison externe, l'adhérence du pneumatique d'une roue motrice devient très faible, le couple sur le demi-arbre lié à cette roue diminue et la vitesse de la roue augmente, la roue "patine" sans contrôle possible. Si par exemple, le conducteur tente de monter sur un trottoir trop haut presque à l'arrêt, les deux roues motrices se bloquent alors que la puissance motrice est non nulle, les couples sur les deux demi-arbres tendent vers l'infini et le moteur cale. En conséquence un différentiel idéal devrait avoir les caractéristiques suivantes:

- produire un couple de même valeur sur chaque demi-arbre;
- permettre que les vitesses de ces demi-arbres soient différentes;
- éviter le déséquilibre des couples sur les deux demi-arbres;
- éviter l'emballement d'une roue si l'autre se bloque , et donc permettre les fonctions d'anti-patinage, d'anti-blocage et de sécurité.

Dans le domaine des véhicules automobiles électriques, des chaînes de traction électriques à essieu moteur à effet différentiel commencent à apparaître. Les essieux comportent un moteur électrique par roue motrice. Les configurations utilisant des moteurs à courant continu sont assez simples mais restent lourdes et chères. Les configurations utilisant des moteurs à courant alternatif sont plus légères mais nécessitent deux circuits électroniques de contrôle symétriques. La sécurité est assurée par un troisième circuit électronique. Ce sont des configurations complexes, chères et dont la sécurité repose uniquement sur l'électronique.

Le brevet DE-A-30 43 004 montre une chaîne de traction comportant au moins un essieu moteur à effet différentiel avec deux moteurs électriques l'un entraînant une roue droite et l'autre une gauche ; le stator du premier moteur alimentant le stator du second moteur.

La présente invention vise à remédier aux inconvénients indiqués ci-dessus et a pour objet une chaîne de traction électrique avec essieu moteur à effet différentiel électrique qui est légère, simple, meilleure marché et dont la sécurité ne repose pas uniquement sur de l'électronique .

La présente invention propose une chaîne de traction électrique pourvue d'au moins un essieu moteur à effet différentiel avec deux moteurs électriques, l'un entraînant une roue droite et l'autre une roue gauche. Le stator du premier moteur est parcouru par un courant qui alimente le stator du second moteur. Le rotor du premier moteur est parcouru par un courant qui alimente le rotor du second moteur. Des moyens de commande imposent les courants dans les rotors et les stators en fonction d'informations représentatives de la position angulaire des rotors.

Le premier moteur peut être du type auto-synchrone à stator polyphasé et soit à rotor bobiné polyphasé alimenté en courants polyphasés, soit à rotor bobiné alimenté en courant continu.

Le second moteur peut être du type auto-synchrone à stator polyphasé et à rotor bobiné polyphasé alimenté en courants polyphasés.

D'autres caractéristiques et avantages de l'invention apparaîtront à la lecture de la description qui suit illustrée par les figures ci-annexées dans lesquelles :

- la figure 1 représente un schéma d'un essieu moteur d'une chaîne de traction électrique selon l'invention;
- la figure 2 représente schématiquement un circuit électrique d'un essieu moteur d'une chaîne de traction électrique selon l'invention;
- les figures 3a et 3b représentent des schémas électriques des moyens de commande des courants statoriques et rotoriques dans les moteurs de l'essieu de la figure 2;
- la figure 4 représente un exemple de réalisation des capteurs de la position angulaire des rotors des moteurs de l'essieu de la figure 2;
- la figure 5 représente schématiquement un circuit électrique d'une variante d'un essieu moteur d'une chaîne de traction électrique selon l'invention;
- la figure 6 représente une vue schématique des moteurs de l'essieu représenté à la figure 2.

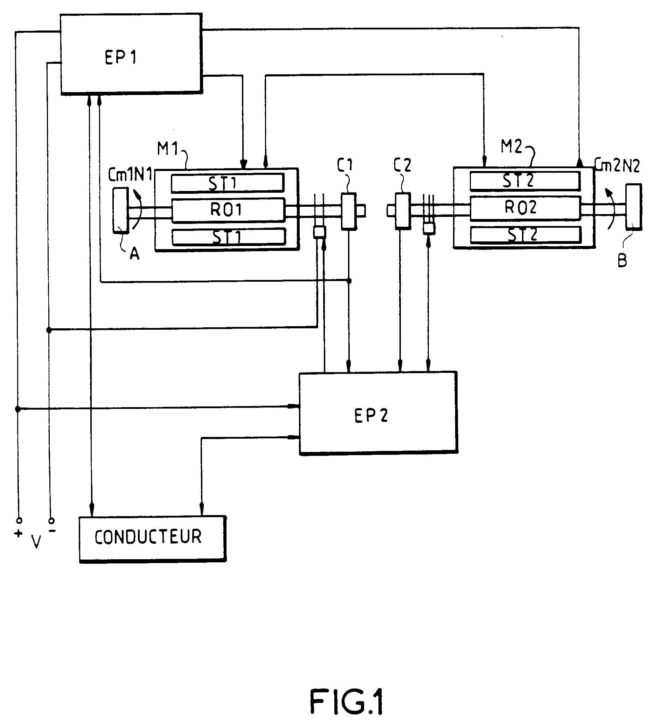

La figure 1 représente un schéma d'un essieu moteur à effet différentiel électrique d'une chaîne de traction automobile électrique selon l'invention pour véhicule automobile.

L'essieu comporte deux moteurs électriques M1,M2. De préférence, les moteurs ont des caractéristiques sensiblement identiques. Les deux moteurs ont un rotor RO1,RO2 bobiné. Le rotor RO1, RO2 de chaque moteur M1, M2 entraîne une roue motrice référencée B à droite et A à gauche de la figure. Les moteurs tournent en sens inverse. La roue A tourne à la vitesse N1 et la roue B à la vitesse N2. Les vitesses N1, N2 sont souvent différentes et prescrites par le sol. Sur chaque rotor est prévu un capteur de position angulaire respectivement C1, C2. Le moteur M1 produit un couple Cm1 et le moteur M2 un couple Cm2 et ces couples sont en principe égaux. Les stators ST1, ST2 des moteurs sont polyphasés. Il est aussi prévu des moyens de commande EP1 qui imposent les courants dans les stators ST1, ST2 des moteurs en fonction d'informations représentatives de la position angulaire du rotor RO1 du moteur M1 et de consignes du conducteur du véhicule (accélération, freinage, direction angulaire des roues directrices etc.) . Ces moyens de commande EP1 comportent des interrupteurs électroniques et sont reliés à une source d'alimentation V continue ou redressée. Cette source est par exemple une batterie rechargeable. Le courant qui circule dans le stator ST1 du premier moteur M1 alimente le stator ST2 du second moteur M2. Il est aussi prévu des moyens de commande EP2 qui imposent les courants dans les rotors RO1, RO2 en fonction d'informations représentatives de la position angulaire des rotors RO1, RO2 et de consignes du conducteur. Les informations représentatives de la position angulaire des rotors proviennent des capteurs de position angulaire C1, C2. Le courant qui circule dans le rotor RO1 du moteur M1 alimente le rotor RO2 du moteur M2. Les moyens de commande EP2 comportent des interrupteurs électroniques et sont reliés à la source d'alimentation V.

L'architecture retenue vise à ce que les couples Cm1 et Cm2 soient égaux et optimum en permanence, et ce indépendamment de la vitesse de rotation des roues motrices.

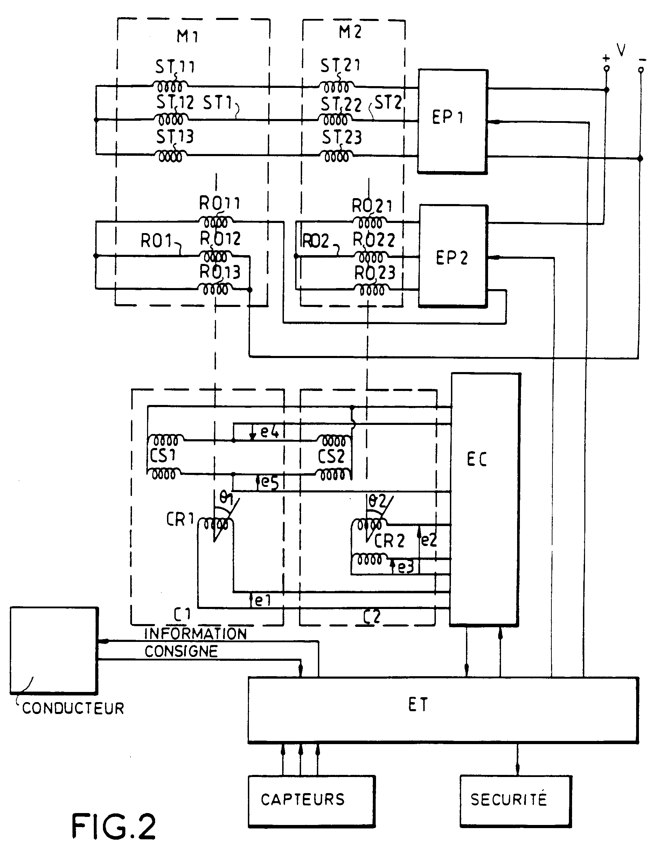

On va maintenant décrire plus en détail la structure des moteurs et leur fonctionnement. La figure 2 représente un schéma électrique d'un essieu à effet différentiel d'une chaîne de traction électrique selon l'invention, pour véhicule automobile. Dans cette configuration le moteur M1 est un moteur autosynchrone triphasé, son stator ST1 comporte trois enroulements ST11, ST12, ST13 montés en étoile. Son rotor RO1 est bobiné et comporte au moins un enroulement . Sur la figure le rotor RO1 comporte trois enroulements RO11, RO12, RO13 de type triphasé mais leur montage est équivalent à un enroulement unique. L'enroulement RO12 est connecté en parallèle avec l'enroulement RO13. L'enroulement RO11 est monté en série avec les deux enroulements RO12, RO13. Le rotor RO1 du moteur M1 est parcouru par un courant d'excitation continu d'intensité Iex. Le stator ST1 du moteur M1 est parcouru par des courants triphasés sinusoïdaux à la fréquence f1.

Ces courants sont par exemple de la forme :

$$I11\ (t) = I1\ \sin(\omega 1t + \varphi 1)$$

$$I12(t) = I1\ \sin(\omega 1t + \frac{2\pi}{3} + \varphi 1)$$

$$I13(t) = I1\ \sin(\omega 1t + \frac{4\pi}{3} + \varphi 1)$$

avec $\omega 1 = 2\pi f1$

A chaque instant $I11\ (t) + I12\ (t) + I13(t) = 0$ puisque les courants sont sinusoïdaux et triphasés. La phase $\varphi 1$ est une constante qui dépend du calage du capteur de position C1 par rapport au rotor RO1.

Ces courants triphasés créent un champ tournant statorique à la vitesse N1 = f1/p si p est le nombre de paires de pôles du stator ST1. Le rotor RO1, lancé à la vitesse N1, est tel que le champ rotorique soit décalé et en retard par rapport au champ statorique. Le couple Cm1 est maximum si le décalage est de $\pi/2$.

Les moyens de commande EP1 ont pour mission de répartir les amplitudes I1 des courants triphasés dans les enroulements statoriques ST11, ST12, ST13 pour qu'à chaque instant le champ statorique soit en quadrature avant par rapport au champ rotorique. A chaque instant, pour une position $\theta 1(t)$ du rotor RO1 les courants alimentant le stator ST1 doivent créer un champ statorique tournant à la vitesse N1 avec un décalage de $\pi/2$ en avance sur le champ rotorique. L'amplitude I1 est ajustée en fonction du couple Cm1 souhaité par le conducteur.

Le moteur M2 est un moteur autosynchrone triphasé. Son stator ST2 comporte trois enroulements ST21, ST22, ST23 montés en série avec respectivement les enroulements ST11, ST12,ST13 du stator ST1. Les enroulements du stator ST1 étant montés en étoile, une branche de l'étoile comporte alors en série un enroulement du stator ST1 et un enroulement du stator ST2. Les deux stators ST1 et ST2 sont parcourus par un même courant statorique. Ce courant crée dans le stator ST2 un champ statorique tournant à la même vitesse N1.

Le rotor RO2 du moteur M2 comporte aussi trois enroulements RO21, RO22, RO23 montés en étoile. Les enroulements du rotor RO2 associés aux moyens de commande EP2 des courants rotoriques sont montés en série avec les enroulements du rotor RO1 du moteur M1. Le courant rotorique d'intensité Iex parcourant le rotor RO1 alimente le rotor RO2. Les enroulements du rotor RO2 sont parcourus par des courants triphasés sinusoïdaux de la forme :

$$i1(t) = \text{Iex } \sin(\omega't + \varphi2)$$

$$i2(t) = \text{Iex } \sin(\omega't + \frac{2\pi}{3} + \varphi2)$$

$$i3(t) = \text{Iex } \sin(\omega't + \frac{4\pi}{3} + \varphi2)$$

avec $\omega' = 2\pi f2$

La phase $\varphi2$ est une constante qui dépend du calage initial du capteur C2 par rapport au rotor RO2.

Ces courants rotoriques de fréquence f2, génèrent un champ rotorique tournant à la vitesse N' = f2/p' par rapport à un repère mécanique du rotor RO2 qui lui même tourne; p' est le nombre de paires de pôle du rotor RO2 et p = p'.

Le rotor RO2 peut produire un couple Cm2 s'il est lancé à une vitesse N2 = N1 ± N'.

N2 = N1 - N' si les champs statoriques et rotoriques tournent dans le même sens et N2 = N1 + N' si les champs statoriques et rotoriques tournent en sens inverse. Comme dans le moteur M1, le couple Cm2 est maximum si le champ tournant rotorique résultant est en retard de $\pi/2$ sur le champ tournant statorique.

L'ensemble série formé d'une part du rotor RO2 qui lui même tourne et des moyens de commande EP2 et d'autre part du rotor RO1 est monté aux bornes de la source d'alimentation V. Les moyens de commande EP2 ont pour mission de répartir les amplitudes Iex des courants dans les enroulements du rotor RO2 de manière à ce qu' à tout instant le champ tournant rotorique résultant soit en quadrature arrière par rapport au champ tournant statorique. La connaissance de la position $\theta2(t)$ du rotor RO2 donnée par le capteur C2 et la connaissance de la position du champ tournant statorique à l'aide de $\theta1(t)-\theta2(t)$ permet de générer les courants souhaités. L'amplitude Iex est ajustée en fonction du couple et de la vitesse souhaités par le conducteur.

On va maintenant décrire plus en détail le fonctionnement des capteurs de position angulaire C1, C2 et de leur calage. Ces capteurs de position angulaire peuvent être de plusieurs types. Par exemple, on peut utiliser des capteurs optiques, des capteurs à transformateur tournant etc. . Il n'est pas nécessaire qu'il aient une très grande précision. Une précision de l'ordre du degré pour un moteur à quatre pôles est acceptable. Sur les figures 2,3a,3b et 4, on a représenté des capteurs à transformateur tournant de type résolveur. Ils auraient pu être de type synchro. Les capteurs de type à transformateur tournant auront le même nombre de pôles que les moteurs. Les capteurs C1 ou C2 représentés comportent un stator CS1, CS2 avec deux enroulements bobinés en quadrature. Les stators des deux capteurs sont montés en série. Le capteur C1 a un rotor CR1 formé d'un seul enroulement. Cet enroulement est alimenté par une tension sinusoïdale $e1 = E1 \sin (\Omega t + \Phi)$.

E1 est l'amplitude de la tension

$\Phi$ est une phase quelconque et $\Omega$ une vitesse angulaire, telle que : $\Omega = 2\pi F$ avec F de l'ordre de quelques kilohertz par exemple..

Le rotor CR1 du capteur C1 est solidaire du rotor RO1 du moteur M1.

A l'arrêt, les tensions aux bornes de chaque enroulement du stator CS1 sont de la forme :

$$e4 = kE1\cos\theta1\sin(\Omega t + \Phi)$$

$$e5 = kE1\sin\theta1\sin(\Omega t + \Phi)$$

k est une constante, $\theta1$ est l'angle entre un repère du rotor CR1 et un repère du stator CS1 du capteur C1. Cet angle représente aussi la position du rotor RO1 du moteur M1 après calage. En rotation , $\theta1(t)$ est de la forme :

$$\theta1(t) = 2\pi t p N1$$

L'exploitation de ces tensions permet à tout moment de connaître l'angle $\theta1(t)$ et la vitesse N1 du rotor RO1 du moteur M1.

Le capteur C2 a un rotor CR2 avec deux enroulements en série. Le rotor CR2 est solidaire du rotor RO2 du moteur M2.

A l'arrêt, les tensions aux bornes de chaque enroulement du rotor CR2 sont de la forme :

$$e2 = kE1\cos(\theta1 - \theta2)\sin(\Omega t + \Phi)$$

$$e3 = kE1\sin(\theta1 - \theta2)\sin(\Omega t + \Phi)$$

$\theta2$ est l'angle entre un repère du rotor CR2 et un repère du stator CS2 du capteur C2. Cet angle représente aussi la position du rotor RO2 du moteur M2 après calage. En rotation, $\theta2(t)$ est de la forme :

$$\theta2(t) = 2\pi t p N2$$

L'exploitation des tensions e2,e3 permet de connaître à tout moment $\theta2(t)$, la vitesse N2 du rotor RO2, la différence $\theta1(t)-\theta2(t)$ et la différence des vitesses de rotation N1-N2.

Le calage initial des capteurs résolveurs est tel que pour une configuration donnée du courant statorique dans le moteur M1 à fréquence f1 nulle, pour une position $\theta10$, le courant Iex traversant le rotor RO1 du moteur M1 crée un champ rotorique en quadrature arrière par rapport au champ statorique.

De la même manière dans le moteur M2, pour une configuration du courant statorique à fréquence f1 nulle, pour une position $\theta 20$, les courants traversant les trois enroulements rotoriques RO21,RO22,RO23, créent un champ rotorique en quadrature arrière par rapport au champ statorique.

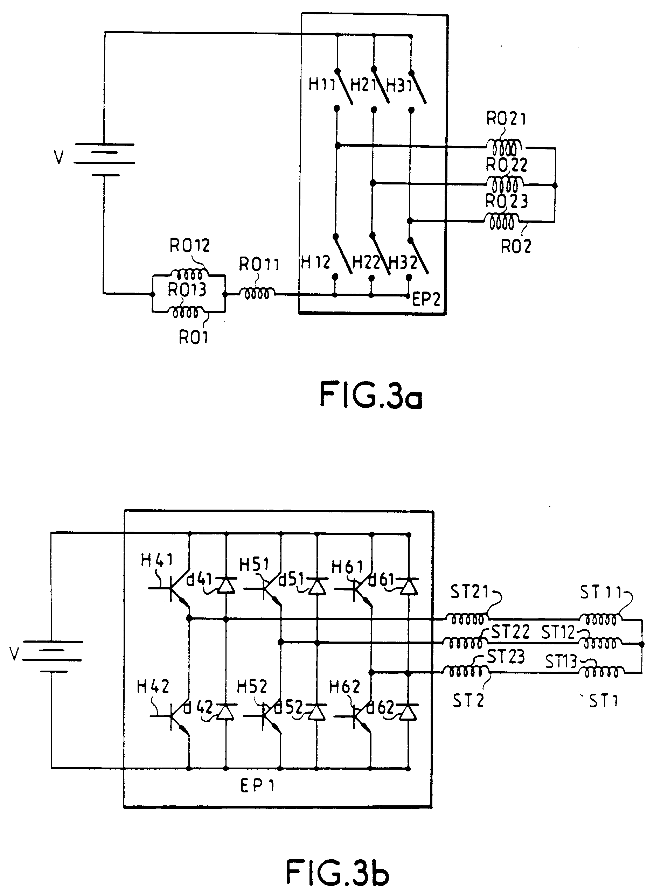

Les figures 3a et 3b représentent des exemples de réalisation des moyens de commande EP1,EP2 des courants statoriques et rotoriques. D'autres montages sont possibles. Sur la figure 3a on a représenté les moyens de commande EP2 des courants rotoriques. Les enroulements rotoriques RO21, RO22, RO23 du moteur M2 ont une première extrémité commune et une seconde extrémité reliée à une paire d'interrupteurs électroniques. Ces interrupteurs électroniques fonctionnent en hacheur. Ils peuvent être des transistors bipolaires, MOSFET, IGBT, des thyristors etc....

L'enroulement RO21 est relié à la paire de hacheurs H11,H12, l'enroulement RO22 à la paire de hacheurs H21,H22, l'enroulement RO23 à la paire de hacheurs H31,H32. L'un des hacheurs de la paire est relié à une première borne de la source d'alimentation V et l'autre à une seconde borne de la source à travers le rotor RO1 du moteur M1.

Ces hacheurs sont commandés en commutation et en modulation en fonction d'informations en provenance des capteurs C1 et C2 et en fonction de consignes de couple et de vitesse du conducteur. La commande est telle que les courants dans les enroulements du rotor RO2 soient sinusoïdaux décalés de $2\pi/3$, qu'ils créent un champ rotorique tournant à la vitesse N', et que le champ rotorique du moteur M2 soit en quadrature arrière sur le champ statorique du moteur M2. Cette commande peut s'effectuer par tous types de modulations possibles y compris la modulation PWM.

La figure 3b représente les moyens de commande EP1 des courants statoriques. Au lieu de représenter les hacheurs sous forme d'interrupteurs, on les a représentés sous forme de transistors. Les moyens de commande EP1 sont comparables aux moyens EP2. Ils peuvent même être identiques. Les trois enroulements statoriques ST11, ST12,ST13 du moteur M1 sont montés en étoile et sont connectée en série avec les trois enroulements statoriques ST21, ST22, ST23 du moteur M2. Chaque paire d'enroulements série (ST11-ST21, ST12-ST22, ST13-ST23) est connectée à une paire de hacheurs respectivement H41-H42, H51-H52, H61-H62. Un des hacheurs de chaque paire est reliée à la première borne de la source d'alimentation V et l'autre à la seconde borne.

Les hacheurs sont commandés en commutation et en modulation en fonction d'informations provenant du capteur C1 et en fonction de consignes de couple du conducteur. La commande est telle que les courants dans les enroulements des stators ST1 et ST2 soient sinusoïdaux décalés de $2\pi/3$, qu'ils créent des champs statoriques tournant à la vitesse N1 et que le champ statorique du moteur M1 soit en quadrature avant sur le champ rotorique du moteur M1. Une paire de diodes dites de "roue libre" référencées respectivement d41-d42, d51-d52, d61-d62 est montée en parallèle avec chaque paire de hacheurs. Ces diodes assurent la protection des hacheurs en entretenant le passage du courant dans les enroulements jusqu'à extinction naturelle de ce courant dans ces enroulements.

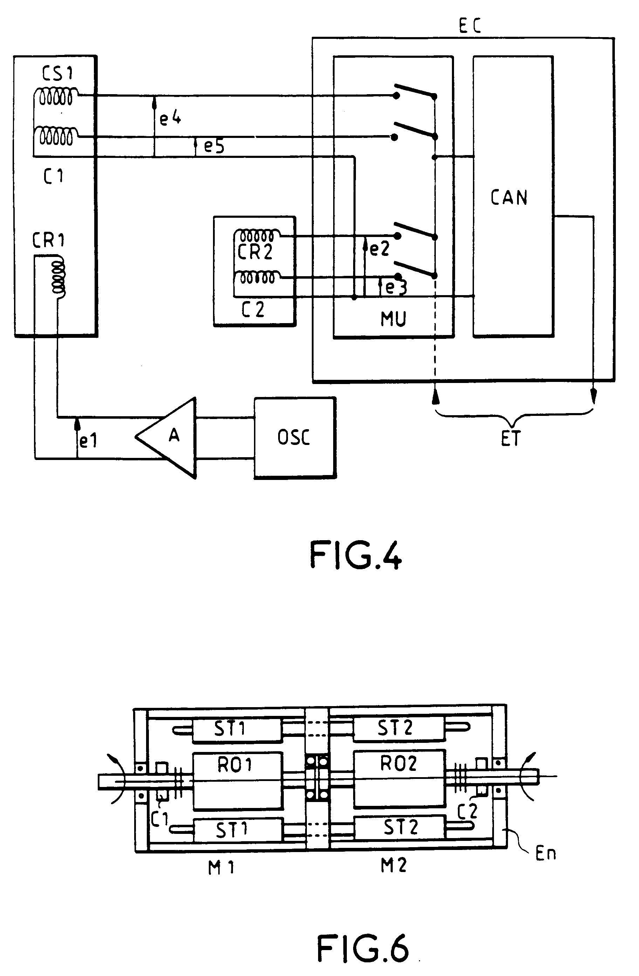

La figure 4 représente un schéma électrique des capteurs de position angulaire C1, C2. Ces capteurs sont associés à un circuit d'interface EC qui élabore les informations représentatives de la position angulaire des rotors. Les deux capteurs C1,C2 sont de type résolveur comme décrit à la figure 2. Le stator CS2 du capteur C2 n'est pas représenté, dans un but de clarté. Le circuit d'interface EC comporte :

- un oscillateur OSC de fréquence F (F = $\frac{\Omega}{2\pi}$) par exemple supérieure à 1kHz suivi d'un amplificateur A pour alimenter le rotor CR1 du capteur C1,
- un multiplexeur échantillonneur MU prélevant les tensions e2, e3 aux bornes des enroulements du rotor CR2 du capteur C2 et les tensions e4, e5 aux bornes des enroulements du stator CS1 du capteur C1. Les tensions échantillonnées sont codées dans un codeur analogique numérique CAN. Les valeurs numérisées délivrées par le codeur analogique numérique sont transmises vers les moyens de commande EP1, EP2 des courants rotoriques et statoriques.

On peut prévoir d'utiliser un processeur ET recueillant les informations du circuit d'interface EC, les consignes du conducteur (accélération, frein, direction) et élaborant des ordres vers les moyens de commande EP1, EP2 des courants statoriques et rotoriques, vers le circuit d'interface EC et vers le conducteur.

On peut aussi utiliser dans la chaîne de traction des capteurs supplémentaires tels que des capteurs de température, de courant, de tension, de charge de ou des batteries et...) . Ces capteurs supplémentaires transmettent leurs informations au processeur ET. La chaîne pourra aussi comporter des organes de sécurité et/ou d'information du conducteur. Le processeur élaborera des messages vers ces organes de sécurité et/ou d'information.

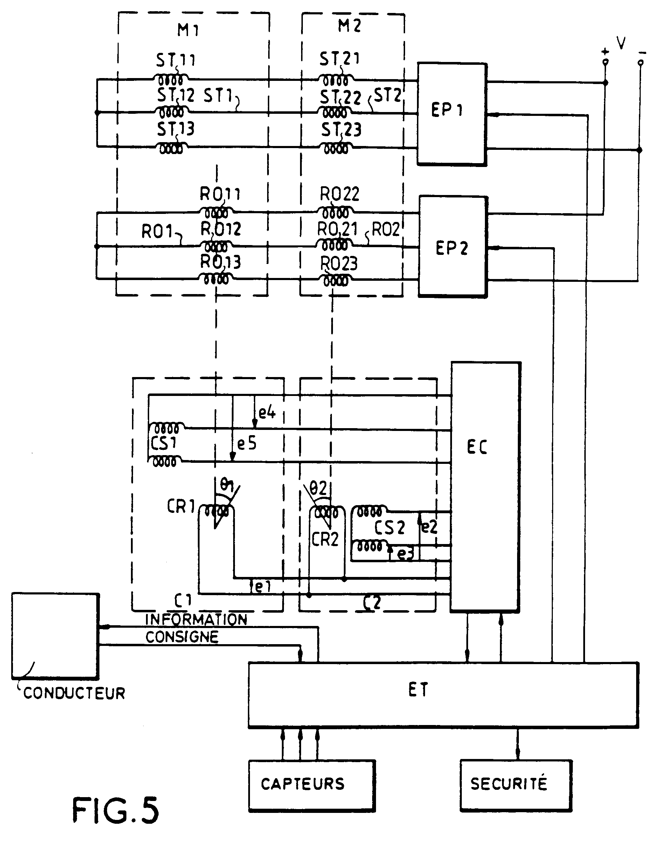

La figure 5 représente une variante d'un essieu moteur à effet différentiel d'un véhicule électrique selon l'invention.

La principale différence avec la configuration de la figure 2 se situe au niveau du montage des rotors RO1 et RO2 des moteurs M1 et M2. Le moteur M1 a maintenant un rotor RO1 alimenté par des courants sinusoïdaux triphasés. Les moteurs M1 et M2 ont leurs stators ST1, ST2 montés en série et également leurs rotors RO1, RO2 montés en série.

Des courants statoriques à la fréquence fO créent un champ statorique tournant à la vitesse NO. Si le rotor RO1 du moteur M1 tourne à la vitesse N1 et le rotor RO2 du moteur M2 à la vitesse N2, les champs tournants des rotors RO1, RO2 tournent respectivement

aux vitesses :

$$\Delta N1 = NO \pm N1$$

$$\Delta N2 = NO \mp N2$$

Ces vitesses $\Delta N1$, $\Delta N2$ sont créées par des courants rotoriques de fréquences respectives $\Delta F1$ et $\Delta F2$.

Le choix de la fréquence fO peut être tel que NO soit compris entre N1 et N2 et un cas particulier pouvant être

$$NO = \frac{N1 + N2}{2}$$

ce qui entraîne $\Delta N1 = -\Delta N2$ .

Dans cette configuration, les vitesses N1 et N2 sont déterminées à partir des informations des capteurs C1 et C2. Au lieu d'être en cascade comme sur la figure 2, ils ont leurs stators indépendants et leurs rotors alimentés par la même tension. Les fréquences fO, $\Delta F1$, $\Delta F2$, les phases et les amplitudes des courants statoriques et rotoriques sont déterminées de manière à avoir en permanence la quadrature arrière des champs rotoriques résultants par rapport aux champs statoriques.

L'inversion du sens de rotation des champs tournants rotoriques par rapport aux rotors RO1 et RO2 peut être obtenue en inversant par exemple les connexions de deux enroulements rotoriques. Sur la figure 5, les enroulements RO21 et RO22 du moteur M2 ont été inversés.

Dans cette configuration, le circuit de commande EP2 des courants rotoriques est monté comme le circuit de commande EP1 des courants statoriques.

Les deux moteurs autosynchrones ainsi décrits ne sont pas consommateurs d'énergie réactive et le défluxage rotorique qui permet un fonctionnement en survitesse assure l'optimisation du rendement dans une large plage de vitesses.

Ce type de moteur peut aussi fonctionner en générateur-frein.

Les roues du véhicule selon l'invention peuvent être entraînées directement par les rotors. On peut bien sur envisager d'intercaler un réducteur de vitesse entre le rotor et la roue.

L'invention peut bien sur comporter plusieurs essieux moteurs à effet différentiel.

Un mode de réalisation original et économique d'un essieu moteur d'une chaîne de traction électrique selon l'invention est représenté à la figure 6. Les deux moteurs M1 et M2 sont disposés dans une même enveloppe En et sont configurés en un moteur bi-rotor. Les deux stators ST1, ST2 en série comportent des bobinages communs. Les deux rotors RO1, RO2 sont distincts. Les circuits électroniques ne sont pas représentés. Cette configuration est conforme à celle de la figure 2. Elle est très compacte et permet de réduire la quantité et le prix de revient des matières premières mises en oeuvre par rapport aux configurations avec des moteurs distincts. Une configuration conforme à la figure 5 aurait deux rotors avec des bobinages communs au lieu qu'ils soient distincts.

Dans les configurations décrites, le moteur M2 aura de préférence un rotor à pôles lisses et portera le bobinage polyphasé.

Un avantage de l'invention par rapport à l'art connu est que les moyens de commande des courants statoriques et rotoriques sont communs aux deux moteurs de l'essieu.

**Revendications**

1. Chaîne de traction électrique comportant au moins un essieu moteur à effet différentiel avec deux moteurs électriques (M1, M2) l'un entraînant une roue droite et l'autre une roue gauche, le stator (ST1) du premier moteur (M1) étant parcouru par un courant qui alimente le stator (ST2) du second moteur (M2), caractérisée en ce que :

   - le rotor (RO1) du premier moteur (M1) est parcouru par un courant qui alimente le rotor (RO2) du second moteur (M2), des moyens de commande (EP1, EP2) imposant les courants dans les rotors (RO1, RO2) et les stators (ST1, ST2) en fonction d'informations représentatives de la position angulaire des rotors (RO1, RO2).

2. Chaîne de traction selon la revendication 1, caractérisée en ce que le second moteur (M2) est un moteur autosynchrone dont le stator (ST2) comporte des enroulements polyphasés et dont le rotor (RO2) comporte des enroulements polyphasés.

3. Chaîne de traction selon l'une des revendications 1 ou 2, caractérisée en ce que le premier moteur (M1) est un moteur autosynchrone dont le stator (ST1) comporte des enroulements polyphasés et dont le rotor (RO1) comporte au moins un enroulement alimenté en courant continu.

4. Chaîne de traction selon l'une des revendications 2 ou 3, caractérisée en ce que les enroulements du stator (ST1) du premier moteur (M1) sont connectés en série avec les enroulements du stator (ST2) du second moteur (M2) .

5. Chaîne de traction selon la revendication 4, caractérisée en ce que les enroulements des stators (ST1, ST2) des moteurs sont montés en étoile, une branche de l'étoile comportant un enroulement (ST11-ST12) de chaque stator, les moyens de commande (EP1) du courant dans les stators (ST1, ST2) comportant une paire (H41, H42) d'interrupteurs électroniques par branche, chaque interrupteur de la paire étant connecté entre l'extrémité de la branche et une borne différente d'une source d'alimentation (V) continue ou redressée.

6. Chaîne de traction selon l'une des revendication 3 à 5, caractérisée en ce que l'enroulement du rotor (RO1) du premier moteur (M1) est connecté en série avec un ensemble formé des enroulements du rotor (RO2) du second moteur (M2) et des moyens de commande (EP2) du courant dans les rotors (RO1, RO2).

7. Chaîne de traction selon la revendication 6, caractérisée en ce que les enroulements (RO21,RO22,RO23) du rotor (RO2) du second moteur (M2) sont montés en étoile, les moyens de commande (EP2) du courant dans les rotors (RO1,RO2) comportant une paire (H11, H12) d'interrupteurs électroniques par branche de l'étoile, un interrupteur de la paire étant connecté entre l'extrémité de la branche et une première borne de la source d'alimentation (V), l'autre entre l'extrémité de la branche et une seconde borne de la source d'alimentation à travers le rotor (RO1) du premier moteur (M1) .

8. Chaîne de traction selon l'une des revendications 1,2,4,5, caractérisée en ce que le premier moteur (M1) est un moteur autosynchrone dont le stator (ST1) comporte des enroulements polyphasés et dont le rotor (RO1) comporte des enroulements polyphasés alimentés en courants polyphasés.

9. Chaîne de traction selon la revendication 8, caractérisée en ce que les enroulements du rotor (RO1) du premier moteur (M1) sont connectés en série avec les enroulements du rotor (RO2) du second moteur (M2).

10. Chaîne de traction selon l'une des revendications 8 ou 9, caractérisée en ce que les enroulements (RO21, RO22, RO23) du rotor (RO2) du second moteur (M2) sont montés en étoile, une branche de l'étoile comportant un enroulement de chaque rotor (RO1, RO2), les moyens de commande (EP2) du courant dans les rotors comportant une paire (H11, H12) d'interrupteurs électroniques par branche, chaque interrupteur de la paire étant connecté entre l'extrémité de la branche et une borne différente d'une source d'alimentation (V) continue ou redressée.

11. Chaîne de traction selon l'une des revendications 5,7 ou 10, caractérisée en ce qu'une diode (d41,d42) de roue libre est montée en parallèle avec un interrupteur électronique (H41,H42).

12. Chaîne de traction selon l'une des revendications 1 à 11, caractérisée en ce qu'un capteur de position (C1,C2) angulaire est monté sur chaque rotor (RO1, RO2) pour mesurer sa position angulaire ($\theta 1(t),\theta 2(t)$).

13. Chaîne de traction selon la revendication 12, caractérisée en ce que les capteurs de position angulaire (C1,C2) sont de type à transformateur tournant et comportent un rotor (CR1,CR2) solidaire du rotor (RO1,RO2) d'un des moteurs (M1,M2) et un stator (CS1, CS2).

14. Chaîne de traction selon la revendication 13, caractérisée en ce que les capteurs (C1,C2) sont connectés à un circuit d'interface (EC) comportant un multiplexeur échantillonneur (MU) qui prélève des tensions sur les rotors et stators des capteurs et les transmet à un convertisseur analogique numérique (CAN) qui délivre les informations représentatives de la position angulaire des rotors (RO1,RO2) des moteurs (M1, M2).

15. Chaîne de traction selon l'une des revendications 1 à 14, caractérisée en ce qu'un processeur (ET) reçoit les informations représentatives de la position angulaire des rotors (RO1,RO2), des consignes d'un conducteur et élabore des informations pour les capteurs de position angulaire, les moyens de commande des courants dans les stators et les rotors, le conducteur.

16. Chaîne de traction selon la revendication 15, caractérisé en ce que des capteurs supplémentaires et des organes de sécurité et/ou d'information sont prévus, le processeur (ET) recevant des informations des capteurs supplémentaires et élaborant des messages vers sur les organes de sécurité et/ou information.

17. Chaîne de traction selon l'une des revendications 1 à 16, caractérisée en ce que les moteurs sont configurés de manière à avoir dans une même enveloppe (EN) deux stators avec des bobinages communs et deux rotors distincts ou deux rotors avec des bobinages communs.

18. véhicule automobile électrique caractérisé en ce qu'il comporte une chaîne de traction selon l'une des revendications 1 à 17.

**Claims**

1. Electric traction system including at least one drive axle with differential effect, with two electric motors (M1, M2), one driving the right wheel and the other the left wheel, the stator (ST1) of the first motor (M1) carrying a current which feeds the stator (ST2) of the second motor (M2), characterized in that

   - the rotor (RO1) of the first motor (M1) carries a current which feeds the rotor (RO2) of the second motor (M2), control means (EP1, EP2) setting the currents in the rotors (RO1, RO2) and the stators (ST1, ST2) on the basis of information representative of the angular position of the rotors (RO1, RO2).

2. Traction system according to Claim 1, characterized in that the second motor (M2) is a self-synchronous motor the stator (ST2) of which includes multi-phase windings and the rotor (RO2) of which includes multi-phase windings.

3. Traction system according to either of Claims 1 and 2, characterized in that the first motor (M1) is a self-synchronous motor the stator (ST1) of which includes multi-phase windings and the rotor (RO1) of which includes at least one winding fed with direct current.

4. Traction system according to either of Claims 2 and 3, characterized in that the windings of the stator (ST1) of the first motor (M1) are connected in series with the windings of the stator (ST2) of the second motor (M2).

5. Traction system according to Claim 4, characterized in that the windings of the stators (ST1, ST2) of the motors are star-mounted, one branch of the star including one winding (ST11 - ST12) of each stator, the means (EP1) of controlling the current in the stators (ST1, ST2) including a pair (H41, H42) of electronic switches per branch, each switch of the pair being connected between the end of the branch and a different terminal of a DC or rectified power supply source (V).

6. Traction system according to one of Claims 3 to 5, characterized in that the winding of the rotor (RO1) of the first motor (M1) is connected in series with an assembly formed by the windings of the rotor (RO2) of the second motor (M2) and of the means (EP2) of controlling the current in the rotor (RO1, RO2).

7. Traction system according to Claim 6, characterized in that the windings (RO21, RO22, RO23) of the rotor (RO2) of the second rotor (M2) are star-mounted, the means (EP2) of controlling the current in the rotors (RO1, RO2) including a pair (H11, H12) of electronic switches per branch of the star, a switch of the pair being connected between the end of the branch and a first terminal of the power supply source (V) the other between the end of the branch and a second terminal of the power supply source via the rotor (RO1) of the first motor (M1).

8. Traction system according to one of Claims 1, 2, 4, 5, characterized in that the first motor (M1) is a self-synchronous motor the stator (ST1) of which includes multi-phase windings and the rotor (RO1) of which includes multi-phase windings fed with multi-phase currents.

9. Traction system according to Claim 8, characterized in that the windings of the rotor (RO1) of the first motor (M1) are connected in series with the windings of the rotor (RO2) of the second motor (M2).

10. Traction system according to either of Claims 8 and 9, characterized in that the windings (RO21, RO22, RO23) of the rotor (RO2) of the second motor (M2) are star-mounted, a branch of the star including a winding of each rotor (RO1, RO2) the means (EP2) of controlling the current in the rotors including a pair (H11, H12) of electronic switches per branch, each switch of the pair being connected between the end of the branch and a different terminal of a DC or rectified power supply source (V).

11. Traction system according to one of Claims 5, 7 and 10, characterized in that a freewheel diode (d41, d42) is mounted in parallel with an electronic switch (H41, H42).

12. Traction system according to one of Claims 1 to 11, characterized in that an angular position sensor (C1, C2) is mounted on each rotor (RO1, RO2) in order to measure its angular position ($\theta1(t)$, $\theta2(t)$).

13. Traction system according to Claim 12, characterized in that the angular position sensors (C1, C2) are of the rotary transformer type and include a rotor (CR1, CR2) integral with the rotor (RO1, RO2) of one of the motors (M1, M2) and a stator (CS1, CS2).

14. Traction system according to Claim 13, characterized in that the sensors (C1, C2) are connected to an interface circuit (EC) including a sampling multiplexer (MU) which picks up voltages on the rotors and stators of the sensors and sends them to an analogue digital converter (ADC) which delivers the information representative of the angular position of the rotors (RO1, RO2) of the motors (M1, M2).

15. Traction system according to one of Claims 1 to 14, characterized in that a processor (ET) receives the information representative of the angular position of the rotors (RO1, RO2), orders from a driver, and derives information for the angular position sensors, the means of controlling the current in the stators and the rotors and the driver.

16. Traction system according to Claim 15, characterized in that supplementary sensors and safety and/or information elements are provided, the processor (ET) receiving information from the supplementary sensors and deriving messages for the safety and/or information elements.

17. Traction system according to one of Claims 1 to 16, characterized in that the motors are configured in such a way as to have two stators within the same casing (EN), with common windings and two separate rotors or two rotors with common windings.

18. Electric motor vehicle characterized in that it includes a traction system according to one of Claims 1 to 17.

## Patentansprüche

1. Elektrischer Antrieb, der mindestens eine Antriebsachse mit Differentialwirkung und zwei Elektromotoren (M1, M2) enthält, von denen der eine das rechte und der andere das linke Rad antreibt, wobei der Stator (ST1) des ersten Motors (M1) von einem Strom durchflossen ist, der den Stator (ST2) des zweiten Motors (M2) speist, dadurch gekennzeichnet, daß der Rotor (RO1) des ersten Motors (M1) von einem Strom durchflossen ist, der den Rotor (RO2) des zweiten Motors (M2) speist, wobei Steuermittel (EP1, EP2) die Ströme in den Rotoren (RO1, RO2) und den Statoren (ST1, ST2) abhängig von für die Winkelstellung der Rotoren (RO1, RO2) repräsentativen Informationen steuern.

2. Antrieb nach Anspruch 1, dadurch gekennzeichnet, daß der zweite Motor (M2) ein Autosynchronmotor ist, dessen Stator (ST2) mehrphasige Wicklungen und dessen Rotor (RO2) mehrphasige Wicklungen enthält.

3. Antrieb nach einem der Ansprüche 1 oder 2, dadurch gekennzeichnet, daß der erste Motor (M1) ein autosynchroner Motor ist, dessen Stator (ST1) mehrphasige Wicklungen enthält und dessen Rotor (RO1) mindestens eine mit Gleichstrom gespeiste Wicklung enthält.

4. Antrieb nach einem der Ansprüche 2 oder 3, dadurch gekennzeichnet, daß die Wicklungen des Stators (ST1) des ersten Motors (M1) mit den Wicklungen des Stators (ST2) des zweiten Motors (M2) in Reihe verbunden sind.

5. Antrieb nach Anspruch 4, dadurch gekennzeichnet, daß die Wicklungen der Statoren (ST1, ST2) sternförmig geschaltet sind, daß ein Zweig des Sterns eine Wicklung (ST11, ST12) von jedem Stator enthält und die Steuermittel (EP1) zur Steuerung des Stroms in den Statoren (ST1, ST2) ein Paar (H41, H42) von elektronischen Schaltern je Zweig enthalten und daß jeder Schalter des Paares zwischen das Ende des Zweiges und eine der beiden Klemmen einer Gleichstrom- oder gleichgerichteten Stromquelle (V) eingefügt ist.

6. Antrieb nach einem der Ansprüche 3 bis 5, dadurch gekennzeichnet, daß die Wicklung des Rotors (RO1) des ersten Motors (M1) in Reihe mit einer Einheit geschaltet ist, die von den Wicklungen des Rotors (RO2) des zweiten Motors (M2) und den Mitteln (EP2) zur Steuerung des Stroms in den Rotoren (RO1, RO2) gebildet wird.

7. Antrieb nach Anspruch 6, dadurch gekennzeichnet, daß die Wicklungen (RO21, RO22, RO23) des Rotors (RO2) des zweiten Motors (M2) in Sternschaltung verbunden sind, daß die Mittel (EP2) zur Steuerung des Stroms in den Rotoren (RO1, RO2) zwei elektronische Schalter (H11, H12) je Zweig des Sterns enthalten und daß ein Schalter jedes Paares zwischen das Ende des Zweigs und eine erste Klemme der Stromquelle (V) eingefügt ist, während der andere Schalter zwischen das Ende des Zweigs und eine zweite Klemme der Stromquelle über den Rotor (RO1) des ersten Motors (M1) angeschlossen ist.

8. Antrieb nach einem der Ansprüche 1, 2, 4, 5, dadurch gekennzeichnet, daß der erste Motor (M1) ein autosynchroner Motor ist, dessen Stator (ST1) mehrphasige Wicklungen enthält und dessen Rotor (RO1) mehrphasige Wicklungen aufweist, die mit Mehrphasenströmen gespeist werden.

9. Antrieb nach Anspruch 8, dadurch gekennzeichnet, daß die Wicklungen des Rotors (RO1) des ersten Motors (M1) mit den Wicklungen des Rotors (RO2) des zweiten Motors (M2) in Reihe geschaltet sind.

10. Antrieb nach einem der Ansprüche 8 oder 9, dadurch gekennzeichnet, daß die Wicklungen (RO21, RO22, RO23) des Rotors (RO2) des zweiten Motors (M2) in Sternschaltung verbunden sind, daß jeder Zweig des Sterns eine Wicklung jedes Rotors (RO1, RO2) enthält, daß die Mittel (EP2) zur Steuerung des Stroms in den Rotoren zwei elektronische Schalter (H11, H12) je Zweig besitzen und daß jeder Schalter des Paares zwischen das Ende des Zweigs und die eine bzw. andere Klemme einer Gleichstrom- oder gleichgerichteten Stromquelle (V) eingefügt ist.

11. Antrieb nach einem der Ansprüche 5, 7 oder 10, dadurch gekennzeichnet, daß eine sogenannte Freilaufdiode (d41, d42) mit einem elektronischen Schalter (H41, H42) parallelgeschaltet ist.

12. Antrieb nach einem der Ansprüche 1 bis 11, dadurch gekennzeichnet, daß eine Winkelstellungs-Meßsonde (C1, C2) auf jedem Rotor (RO1, RO2) zur Messung von dessen Winkelstellung ($\Theta_1(t)$, $\Theta_2(t)$) montiert ist.

13. Antrieb nach Anspruch 12, dadurch gekennzeichnet, daß die Sonden zur Messung der Winkelstellung (C1, C2) einen drehenden Transformator enthalten und einen mit dem Rotor (RO1, RO2) eines der Motoren (M1, M2) fest verbundenen Rotor (CR1, CR2) sowie einen Stator (CS1, CS2) besitzen.

14. Antrieb nach Anspruch 13, dadurch gekennzeichnet, daß die Sonden (C1, C2) an eine Schnittstelle (EC) angeschlossen sind, die einen Tastmultiplexer (MU) enthält, welcher Spannungen an den Rotoren und Statoren der Meßsonden abnimmt und an einen Analog-Digital-Wandler (CAN) übermittelt, der die für die Winkelstellung der Rotoren (RO1, RO2) der Motoren (M1, M2) repräsentativen Informationen liefert.

15. Antrieb nach einem der Ansprüche 1 bis 14, dadurch gekennzeichnet, daß ein Prozessor (ET) die für die Winkelstellung der Rotoren (RO1, RO2) repräsentativen Informationen sowie Vorgaben eines Fahrzeuglenkers empfängt und Informationen für die Winkelmeßsonden, die Steuermittel für die Ströme in den Statoren und Rotoren sowie für den Fahrzeuglenker erarbeitet.

16. Antrieb nach Anspruch 15, dadurch gekennzeichnet, daß zusätzliche Sonden und Sicherheitsorgane und/oder Informationsorgane vorgesehen sind und der Prozessor (ET) Informationen von den zusätzlichen Sonden empfängt und Nachrichten für die Sicherheitsorgane und/oder Informationsorgane erarbeitet.

17. Antrieb nach einem der Ansprüche 1 bis 16, dadurch gekennzeichnet, daß die Motoren so konfiguriert sind, daß sie in einem gemeinsamen Gehäuse (EN) zwei Statoren mit gemeinsamen Spulen und zwei getrennte Rotoren oder zwei Rotoren mit gemeinsamen Spulen enthalten.

18. Elektrisch angetriebenes Fahrzeug, dadurch gekennzeichnet, daß es einen Antrieb nach einem der Ansprüche 1 bis 17 enthält.

FIG.1

FIG.2

FIG.3a

FIG.3b

FIG.4

FIG.6

FIG.5